# EUROPEAN PATENT SPECIFICATION

(11) **EP 0 394 237 B1**
(45) Date of publication and mention of the grant of the patent: **14.04.1993**
(21) Application number: 88904539.9
(22) Date of filing: 23.05.1988
(51) Int. Cl.: C08F 4/642, C08F 10/06

(54) **CATALYST FOR PRODUCING ATACTIC POLYPROPYLENE, AND PROCEDURE FOR PREPARING SUCH CATALYST**
KATALYSATOR ZUR HERSTELLUNG VON ATAKTISCHEM POLYPROPYLEN UND VERFAHREN ZUR HERSTELLUNG
CATALYSEUR POUR PRODUIRE DU POLYPROPYLENE ATACTIQUE, ET PROCEDE POUR PREPARER CE CATALYSEUR

(30) Priority: 25.05.1987 FI 872303
(43) Date of publication of application: 31.10.1990
(73) Proprietor: NESTE OY, FIN-02150 Espoo (FI)
(72) Inventor: LEINONEN, Timo, SF-06450 Porvoo (FI); SORMUNEN, Pekka, SF-06100 Porvoo (FI)
(74) Representative: Lamb, John Baxter
(86) International application number: FI8800077
(87) International publication number: WO8809348

(56) References cited:
- EP-A- 0 168 317
- DE-A- 2 751 807
- FR-A- 2 127 368
- GB-A- 1 390 001
- US-A- 4 276 191
- Chemical abstracts Vol. 107 (1987), Abstract no. 199118a, Jpn. Kokai Tokkyo Koho
- Chemical Abstracts, Vol. 98 (1983), Abstract no. 161328b, Jpn. Kokai Tokkyo Koho

## Description

The present invention concerns a Ziegler-Natta catalyst with the aid of which mainly atactic polypropylene can be produced very simply, and a procedure for preparing a catalyst of this kind.

In the patent literature numerous examples are known of the producing of isotactic polypropylene using catalysts with MgCl₂ carrier. The starting material may be directly MgCl₂ or an organo-magnesium compound treated with a chlorinating agent (e.g. alkyl chlorides, HCl, and CCl₄) and which may have the form MgClR or MgR₂.

MgCl₂ has been activated to a catalytically active crystal form either mechanically, by grinding, or chemically, by first treating it with an alcohol and then with a titanium compound. Since the desired product was an isotactic polypropylene, an agent improving stereo selectivity (a so-called internal donor) has invariably been added to the catalyst in one of its preparation steps, for instance ethylbenzoate (EtOBz). Activation of the catalyst with an aluminiumalkyl or aluminiumchloroalkyl compound yields an active Ziegler-Natta catalyst, which in order to achieve a good isotacticity index (> 98%) furthermore requires that in the aluminium treatment another electron donor (a so-called external donor) is used. These donor and activation steps complicate the catalyst preparation, and it is not possible with catalysts of this type to prepare a catalyst producing mainly atactic polypropylene. Using ground MgCl₂*TiCl₄ catalyst in producing atactic polypropylene is known in the art (Angew. Makromol. Chem. 120 (1984) 73-90). A value about 20% is then achieved for the isotacticity. The reference GB 1,335,887 (Montecatini Edison, filed Oct. 29, 1970) also discloses a MgCl₂*TiCl₄ catalyst prepared by grinding and with isotacticity 28.5% (heptane extraction method) and activity about 2 kg polymer per g of catalyst are achieved. Catalyst producing atactic polypropylene has also been prepared in said reference by grinding MgCl₂ together with 3TiCl₃*AlCl₃, but the activity remained low in that case. Additives (EtOBz, BuNH₂) have also been added at grinding, but the isotacticity index went higher if this was done (to 44%, see JP 59/43008 A2, Toyo Soda Mfg Co).

Mg-alkyl compounds have also been used for starting materials in preparing catalysts for atactic polypropylene. There are few examples, to be sure, and no activities equal to those in the present invention have been reached in any one of them. In these examples, TiCl₄ was reduced with the aid of an Mg alkyl or of Grinard's reagent to a TiCl₃-based catalyst. When TiCl₄ is reacted with magnesiumdialkyl or alkylmagnesiumhalide compounds, catalysts containing TiCl₃ are obtained, their activity falling short of that of Mg chloride carrier catalysts. There are no examples of chlorinating an Mg dialkyl to MgCl₂ in such a case.

In the reference DE 2 751 807 (Veba-Chemie AG, 1979), a catalyst has been prepared in a rather complicated way, starting from Mg chips which were treated with ethylbromide in ether solution, whereby MgEtBr was obtained, of which EtMg is formed in accordance with Schlenk's equilibrium equation. This was titanized with TiCl₄. Catalyst activated by the catalyst component thus obtained and by DEAC (diethylaluminium chloride) produced "substantially atactic" polypropylene (isotacticity index < 20%) as little as 0.5-1.5 kg per g of cat.

The dibutylmagnesium/triethylaluminium complex has reacted with titanium tetrachloride, according to the reference BE 883 637 = US 4,276,191 (Standard Oil Co., 1980). Polymerizing with DEAC produced highly atactic polymer, but the activity was only 128 g polypropylene per g of cat.

In the reference US 3,933,934 (Naphtachimie, 1978), TiCl₄ was reduced with the aid of metallic Mg, iodine and n-butyl-chloride, thereby obtaining a mixture of MgCl₂ and TiCl₃. With this catalyst highly atactic polypropylene was obtained (heptane-soluble fraction 96-99%), but the activity was low, on order of less than 1 kg polymer per g of cat.

Reacting TiCl₄ with magnesium alcoholates or with magnesium hydroxide has been applied in preparing catalysts appropriate for producing amorphous polyolefines, in the reference US 3,951,935 (Hoechst AG, 1976). SiCl₄ has also been used as additive. The activities are low, about 400 g polymer per mmol, owing to the reaction products of alcoholate and TiCl₄, titaniumchloroalkoxides.

The polymerizing catalyst of the present invention is formed with a chlorine-containing compound, which must not contain titanium, of a chlorinated organic magnesium compound which has been treated with TiCl₄ solution, and this component constitutes together with a cocatalyst an active catalyst system for producing atactic polypropylene. Preparation of the polymerizing catalyst of the invention is commenced by chlorinating an organic magnesium compound which has been dissolved in an anhydrous solvent, for instance in a hydrocarbon. Treatment of this solution with a suitable chlorinating agent is easiest to perform by bubbling gaseous chlorinating agent through the solution, for instance chlorine or hydrogen chloride gas. Chlorination of the Mg compound is also feasible with a liquid chlorinating agent, such as carbon tetrachloride, chloroform, dichloromethane, alkylchlorides (e.g. butylchloride), etc. The product thus obtained is washed several times with dry, that is anhydrous, solvent, which is advantageously the same hydrocarbon as said solvent for the magnesium compound. This chlorinated magnesium compound, which may be called carrier, is next treated with TiCl₄ by refluxing the solution of the carrier compound with liquid TiCl₄ during several hours, e.g. 2-4 hrs, at elevated temperature, about 80-100°C. The product thus obtained has the following elemental contents (only the most important contents have been measured): Mg = 15-21% by weight, Ti = 2-10% by weight, Cl = 30-85% by weight.

The catalyst initiating and maintaining polymerization consists of a component constituted by the carrier and the Ti compound, and a cocatalyst, for which trialkylaluminium is advantageously used when producing tactic polypropylene.

The polymerizing proper may be carried out under various polymerizing conditions with this catalyst, but slurry conditions have been found to be best, that is, catalyst and monomer are added to a suitable solvent, and the polymer, which is insoluble in said fluid, forms as a slurry therein.

The following observations can be made when comparing the present invention with the references cited in the foregoing and with polypropylene catalyst patents on the whole:-
(a) in the patents, polypropylene is understood to be the usually desired isotactic polymer (which contains heptane-soluble polymer less than 10-20%);
(b) no donor whatsoever is used in the catalyst of the invention;
(c) although the use of MgCl₂, and partly also the use of Mg alkyls, towards producing atactic polypropylene is known in the art, we are not aware of any patent in which the carrier is expressly prepared for producing atactic polypropylene by chlorinating a magnesiumalkyl compound for catalyst carrier in the way described above and by subsequently reacting the carrier with a titanium compound. That is, the chlorinating compound is not a compound containing titanium, e.g. TiCl₄, which involves formation of TiCl₃, whereby the activity is lowered;
(d) there is no need to grind the carrier in order to make a good catalyst, as has been done when starting out with MgCl₂; the procedure is therefore quite simple. The catalyst is prepared in one single reactor, and only two reaction steps (chlorinating and titanizing) are required in the process.

Atactic polypropylene is a simple amorphous polyolefine. It has surfactant properties owing to its amorphous state, and its uses are based precisely on this circumstance. It may indeed be used, for instance, to make hot melt glues, to make lamination glues, to fill cables, as an addition to bitumen or to replace it completely in roofing materials, as adhesive component in anticorrosives, in wall-to-wall carpeting, in acoustic lagging, and in various crystals and sealing compounds. It also serves as cementing substance and as moisture protection in road construction materials and traffic lane markings. It may be used as an inexpensive filler and/or modifier substance in elastomers.

Atactic polypropylene may be added to plaster of Paris to make it waterproof. It is usable in laminations for foodstuff packaging because it is non-toxic and thus meets the provisions concerning foodstuff packages.

Modified with maleic acid anhydride, atactic polypropylene is usable as additive in lubricating oils. Atactic polypropylene grafted with polybutadiene, with the aid of peroxides, is suitable for producing films, tubing, sections, laminations or fibres.

Atactic polyolefines, and consequently atactic polypropylene as well, may be used in self-adhesive tapes, in moisture-resistant thermal and electric insulating materials, in inks, as oil absorbent, and in cold-pressing objects.

The catalyst was prepared as described in the examples following below.

### EXAMPLE 1

100 ml BOMAG (butyloctylmagnesium 20% heptane solution, Schering AG) were added into a one-litre glass reactor fitted with mixer, thermometer and reflux condenser. All transfers and treatments took place under pure nitrogen (99.999%). 100 ml heptane, dried on molecular screens, were added. Dry chlorine gas was bubbled through the mix during 30 min. while the temperature was 20-32^{o}C. The brown precipitate thus obtained was washed four times with dry heptane, allowed to settle, and the heptane was siphoned off. The solid catalyst carrier was treated with 100 ml heptane and 100 ml TiCl₄ during 2 hours at 80-100^{o}C. The catalyst thus obtained was washed with heptane five times while warm, the precipitate was allowed to settle, the heptane was removed by siphoning, followed by drying in a nitrogen flow. The solid catalyst contained: Mg 16.5% by weight, Ti 4.5% by weight, and Cl 60.0% by weight.

### EXAMPLE 2

150 ml BOMAG and 300 ml dry heptane were added into a one-litre reactor. The mix was treated with dry HCl gas during 30 min., cooling the reactor on an ice/water bath. The temperature kept between 20 and 30^{o}C. A light yellow precipitate formed, through which nitrogen was conducted during 30 min. 300 ml heptane were added, the material was allowed to settle, the solution was siphoned off, and the catalyst carrier was washed four times as described. 100 ml TiCl₄ and 100 ml heptane were added into reactor; titanium treatment was carried out during 2 hours at 100^{o}C. 10 ml heptane were added, settling was allowed, the solution was siphoned off, and the catalyst was washed five times with hot heptane. The product was ultimately dried in vacuum and in nitrogen flow. The solid catalyst contained: Mg 10.2% by weight, Ti 2.3% by weight, and Cl 80.0% by weight.

### EXAMPLE 3

150 ml BOMAG and 300 ml dry heptane were added into a one-litre reactor. 40 ml CCl₄, dissolved in 40 ml heptane, were slowly added from a dropping funnel. The reactor was cooled on an ice bath, the temperature keeping within 10-35^{o}C. A light brown precipitate was obtained, which was washed four times with 300 ml heptane. The catalyst carrier was treated with 100 ml TiCl₄ and 100 ml heptane at 100^{o}C during 2 hours. The reddish brown catalyst thus obtained was washed four times with hot heptane and dried in vacuum and in nitrogen flow. The solid catalyst contained: Mg 21.0% by weight, Ti 2.1% by weight, and Cl 62% by weight.

### EXAMPLE 4

115 ml DBM (14% dibutylmagnesium/Isopar E solution, Lithco Europe Ltd) and 300 ml heptane were added into a one-litre reactor. Chlorine gas was conducted through the solution during 20 min. at 20-30^{o}C. The yellow precipitate thus obtained was nitrogenated during 30 min. 600 ml heptane were added, and settling was allowed. The solution was siphoned off and 50 ml TiCl₄ and 50 ml heptane were added upon the catalyst carrier. The temperature was raised to 92^{o}C and kept at this height 2 hours. The catalyst thus obtained was washed four times with 300 ml heptane while hot. Drying in vacuum and in nitrogen flow followed. The solid catalyst contained: Mg 17.1% by weight, Ti 5.5% by weight, and Cl 59.8% by weight.

### EXAMPLE 5

Into a one-litre reactor, 100 ml heptane and 14.9 g Mg(OEt)₂ were added. HCl was bubbled through the suspension at 20-80^{o}C during 2 hours. whereby the colour turned light brown. 100 ml TiCl₄ were added to the suspension, and the mixture was kept at 98^{o}C for 2 hours. Settling was allowed, the solution was siphoned off, and washing with hot heptane was performed four times. The product was dried with nitrogen. The solid catalyst contained: Mg 15.4% by weight, Ti 8.9% by weight, and Cl 58% by weight.

### POLYMERIZING

Propylene was polymerized with the aid of a combination of the Mg/Ti components as in Examples 1 to 5 and triisobutylaluminium, in slurry conditions, as follows. 630 ml heptane were placed in a two-litre reactor. A syringe was used to add 20 ml aluminiumalkyl diluted in heptane, whereupon a special feeder funnel was used to add the catalyst, flushing with 50 ml heptane (total volume: 700 ml). For aluminium alkyl, triisobutylaluminium was used, with Al/Ti ratio = 100. The mixing was adjusted to 500 rpm. Hydrogen was added, and polymerizing was performed by feeding gaseous monomer continuously. Polymerizing was done during 3 hours at 70^{o}C. On concluded polymerizing, the solvent was evaporated from the product in a three-litre decanting glass, which was left to stand about 10 hours in a fume cupboard. Evaporation was then continued with slow and cautious heating (about 4 hours) until the polymer was completely molten. Careful agitation was applied, and the product was poured into an aluminium mould. The gain was weighed. The isotacticity was measured on the polymer which had been comminuted to pieces 3-5 mm in diameter, by extracting the product (about 3 g of it) during 6 hours with boiling heptane.

The results recorded in the polymerizing tests are presented in Table 1 below.

**TABLE 1**

| Polymerizing tests with the catalysts of the Examples | | | | |
|---|---|---|---|---|
| Example | Propylene press., bar | Hydrogen press., bar | Activity kg PP/g cat. | Isotacticity % |
| 1 | 8 | 3.6 | 7.8 | 22 |
| 2 | 8 | 3 | 5.2 | 28 |
| 3 | 8 | 3 | 5.7 | 37 |
| 4 | 8 | 3 | 4.0 | 25 |
| 5 | 8 | 3 | 4.0 | 38 |

## Claims

1. A catalyst for producing atactic polypropylene, **characterized** in that it consists of a transition metal component with a carrier which is an organic Mg compound chlorinated with a chlorine-containing compound containing no titanium and titanized with TiCl₄ and containing 15-20% by weight of Mg, 2-10% by weight of Ti and 30-85% by weight of Cl, and of a trialkylaluminium cocatalyst, without any electrondonating compound whatsoever.

2. Catalyst according to claim 1, **characterized** in that the organic magnesium compound is dialkylmagnesium, advantageously butyloctyl-magnesium or dibutylmagnesium.

3. Catalyst according to claim 1, **characterized** in that the chlorinating compound is Cl₂ gas.

4. Catalyst according to claim 1, **characterized** in that the chlorinating compound is hydrogen chloride HCl.

5. Catalyst according to claim 1, **characterized** in that the chlorinating compound is carbon tetrachloride CCl₄.

6. Catalyst according to claim 4, **characterized** in that the organic magnesium compound is magnesium ethanolate Mg(OC₂H₅)₂.

7. Procedure for preparing a catalyst suitable for use in producing atactic polypropylene, **characterized** in that an organic Mg compound, uhich has been dissolved in an anhydrous liquid hydrocarbon, is chlorinated with a compound containing chlorine and containing no titanium, and the carrier compound thus obtained is treated, with reflux, with liquid TiCl₄, and the transition metal component thus obtained (containing 15-20% by weight of Mg, 2-10% by weight of Ti and 30-85% of Cl) is combined with trialkylaluminium, without presence of any electron-donor compound whatsoever.

8. Procedure according to claim 7, **characterized** in that the organic Mg compound is dialkylmagnesium, advantageously butyloctylmagnesium or dibutylmagnesium.

9. Procedure according to claim 8, **characterized** in that the chlorinating compound is Cl₂ gas.

10. Procedure according to claim 8, **characterized** in that the chlorinating compound is hydrogen chloride HCl.

11. Procedure according to claim 8, **characterized** in that the chlorinating compound is carbon tetrachloride CCl₄.

12. Procedure according to claim 10, **characterized** in that the organic Mg compound is magnesium ethanolate Mg(OC₂H₅)₂.

13. Procedure according to any one of claims 8-12, **characterized** in that titanizing is carried out at a temperature about 80-100^{o}C.

14. Procedure according to any one of claims 8-13, **characterized** in that the titanizing time is about 2-4 hours.

## Patentansprüche

1. Katalysator zur Herstellung von ataktischem Polypropylen, dadurch gekennzeichnet, daß er aus einer Übergangsmetallkomponente mit einer Trägersubstanz besteht, die eine organische Magnesiumverbindung ist, welche mit einer Chlor enthaltenden Verbindung chloriert ist, die kein Titan enthält, und welche mit TiCl₄ titanisiert wurde und 15-20 Gew.-% Mg, 2-10 Gew.-% Titan und 30-85 Gew.-% Cl enthält, und aus einem Trialkylaluminium als Cokatalysator ohne irgendeine elektronenspendende Verbindung.

2. Katalysator nach Anspruch 1, dadurch gekennzeichnet, daß die organische Magnesiumverbindung Dialkylmagnesium ist, vorzugsweise Butyloctylmagnesium oder Dibutylmagnesium.

3. Katalysator nach Anspruch 1, dadurch gekennzeichnet, daß die chlorierende Verbindung Cl₂-Gas ist.

4. Katalysator nach Anspruch 1, dadurch gekennzeichnet, daß die chlorierende Verbindung Chlorwasserstoff (HCl) ist.

5. Katalysator nach Anspruch 1, dadurch gekennzeichnet, daß die chlorierende Verbindung Tetrachlorkohlenstoff (CCl₄) ist.

6. Katalysator nach Anspruch 4, dadurch gekennzeichnet, daß die organische Magnesiumverbindung Magnesiumethanolat (Mg(OC₂H₅)₂) ist.

7. Verfahren zur Herstellung eines Katalysators, der zur Herstellung von ataktischem Polypropylen geeignet ist, dadurch gekennzeichnet, daß eine in einem wasserfreien flüssigen Kohlenwasserstoff aufgelöste organische Magnesiumverbindung mit einer Chlor enthaltenden Verbindung chloriert wird, die kein Titan enthält, wobei die so erhaltene Verbindung der Trägersubstanz unter dem Rückfluß mit flüssigem Titantetrachlorid behandelt wird und die dadurch erhaltene Komponente des Übergangsmetalls (mit einem Gehalt von 15-20 Gew.-% Mg, 2-10 Gew.-% Ti und 30-85 Gew.-% Cl) mit Trialkylaluminium ohne Anwesenheit irgendeiner elektronenspendenden Verbindung vereinigt wird.

8. Verfahren nach Anspruch 7, dadurch gekennzeichnet, daß die organische Magnesiumverbindung Dialkylmagnesium ist, vorzugsweise Butyloctylmagnesium oder Dibutylmagnesium.

9. Verfahren nach Anspruch 8, dadurch gekennzeichnet, daß die chlorierende Verbindung Cl₂-Gas ist.

10. Verfahren nach Anspruch 8, dadurch gekennzeichnet, daß die chlorierende Verbindung Chlorwasserstoff (HCl) ist.

11. Verfahren nach Anspruch 8, dadurch gekennzeichnet, daß die chlorierende Verbindung Tetrachlorkohlenstoff (CCl₄) ist.

12. Verfahren nach Anspruch 10, dadurch gekennzeichnet, daß die organische Magnesiumverbindung Magnesiumethanolat (Mg(OC₂H₅)₂) ist.

13. Verfahren nach Anspruch 8 bis 12, dadurch gekennzeichnet, daß die Titanisierung bei einer Temperatur von etwa 80-100 °C ausgeführt wird.

14. Verfahren nach Anspruch 8 bis 13, dadurch gekennzeichnet, daß die Dauer der Titanisierung etwa 2-4 Stunden dauert.

## Revendications

1. Catalyseur pour produire du polypropylène actactique, caractérisé en ce qu'il consiste en un composant métallique de transition avec un véhicule qui est un composé organique de Mg chloriné avec un composé contenant du chlore et ne contenant pas de titane et titanisé avec TiCl₄ et contenant de 15 à 20 % en poids de Mg, de 2 à 10 % en poids de Ti et 30 à 85% en poids de Cl et en un co-catalyseur trialkylaluminium sans aucun composé électrondonneur que ce soit.

2. Catalyseur selon la revendication 1, caractérisé en ce que le composé organique de magnésium est un di-alkylmagnésium, avantageusement du butyloctylmagnésium ou du dibutylmagnésium.

3. Catalyseur selon la revendication 1, caractérisé en ce que le composé chlorurant est Cl₂ gazeux.

4. Catalyseur selon la revendication 1, caractérisé en ce que le composé chlorurant est le chlorure d'hydrogène HCl.

5. Catalyseur selon la revendication 1, caractérisé en ce que le composé chlorurant est le tétrachlorure de carbone CCl₄.

6. Catalyseur selon la revendication 4, caractérisé en ce que le composé organique de magnésium est l'éthanolate de magnésium Mg (OC₂H₅)₂.

7. Procédé pour produire un catalyseur approprié à un usage dans la production de polypropylène atactique, caractérisé en ce que un composé organique de Mg, qui a été dissous dans un hydrocarbure liquide anhydre est chloruré avec un composé contenant du chlore et ne contenant pas de titane et que le composé véhiculaire ainsi obtenu est traité, sous reflux, avec du TiCl₄ liquide et que le composant métallique de transition ainsi obtenu (contenant de 15 à 20 % en poids de Mg, de 2 à 10 % en poids de Ti et de 30 à 85 % de Cl) est combiné avec un trialkylaluminium sans la présence d'un quelconque composé donneur d'électrons.

8. Procédé selon la revendication 7, caractérisé en ce que le composé organique de Mg est un dialkylmagnésium, avantageusement le butyloctylmagnésium ou le di-butylmagnésium.

9. Procédé selon la revendication 8, caractérisé en ce que le composé chlorurant est Cl₂ gazeux.

10. Procédé selon la revendication 8, caractérisé en ce que le composé chlorurant est le chlorure d'hydrogène HCl.

11. Procédé selon la revendication 8, caractérisé en ce que le composé chlorurant est le tétrachlorure de carbone CCl₄.

12. Procédé selon la revendication 10, caractérisé en ce que le composé organique de Mg est l'éthanolate de magnésium Mg (OC₂H₅)₂.

13. Procédé selon l'une quelconque des revendications 8 à 12, caractérisé en ce que la titanisation est effectuée à une température comprise entre 80 et 100°C environ.

14. Procédé selon l'une quelconque des revendications 8 à 13, caractérisé en ce que la durée de la titanisation est comprise entre 2 et 4 heures environ.
